# EUROPÄISCHE PATENTSCHRIFT

(11) **EP 0 678 269 B1**
(45) Veröffentlichungstag und Bekanntmachung des Hinweises auf die Patenterteilung: **31.05.2000**
(21) Anmeldenummer: 95104183.9
(22) Anmeldetag: 21.03.1995
(51) Int. Cl.: A47J 43/07

(54) **Rotierender Rührbesen**
Twirling-stick
Batteur-mélangeur

(30) Priorität: 23.04.1994 DE 4414228
(43) Veröffentlichungstag der Anmeldung: 25.10.1995
(73) Patentinhaber: Braun GmbH, Kronberg (DE)
(72) Erfinder: Millan, Jose, E-08028 Barcelona (ES); Falco, Desiderio, E-08028 Barcelona (ES); Rodriguez Soberino, Emilio, E-08940 Cornella Barcelona (ES)

(56) Entgegenhaltungen:
- EP-A- 0 216 234
- EP-A- 0 410 527
- DE-A- 1 941 321
- DE-A- 3 346 147
- DE-B- 2 815 697

## Beschreibung

Die Erfindung betrifft einen rotierenden Rührbesen mit einer Antriebswelle und mit mindestens einem drahtförmigen, als Schleife ausgebildeten Rührelement, das sich zunächst über das eine Ende quer von der Antriebswelle weg erstreckt, das sich nach einer ersten Biegung dann über einen ersten Abschnitt nach unten erstreckt, das anschließend nach einer nächsten Biegung über einen zweiten Abschnitt sich im wesentlichen wieder quer zur Antriebswelle erstreckt, das nach einer weiteren Biegung über einen dritten Abschnitt wieder nach oben verläuft und das schließlich nach einer letzten Biegung über das andere Ende wieder quer zur Antriebswelle und zurück zu dieser verläuft.

Derartige Rührbesen sind bereits seit vielen Jahren bekannt. Sie werden insbesondere für das Verrühren und Schaumigschlagen von Speisen verwendet, die insbesondere an elektrisch betriebene Handrührer ankuppelbar und von diesen antreibbar sind. So ist aus der DE-A-19 41 321 ein Rührbesen bekannt, bei dem die Rührelemente aus spiralenförmigen Drähten gebildet werden.

Weiterhin ist aus der DE - 33 46 147 A1 der eingangs genannte Rührbesen bekannt, der zwar einen ersten und dritten Abschnitt aufweist, eine Aussage über den Verlauf der Abschnitte in Abhängigkeit der vorgegebenen Drehzahl ist aber hier nicht angegeben.

Aufgabe der Erfindung ist es nun, einen rotierenden Rührbesen mit besonders einfachen Mitteln derart zu verbessern, daß man mit ihm insbesondere flüssigere Speisen möglichst intensiv und in kürzester Zeit durchmischen kann, ohne daß die Nahrungsmittel allzu stark herumspritzen.

Diese Aufgabe wird erfindungsgemäß dadurch gelöst, daß der erste und dritte Abschnitt im wesentlichen jeweils aus unterschiedliche Erstreckungsrichtungen aufweisenden oberen und unteren Segmenten bestehen und daß der Hinterherlauf des ersten und dritten Abschnitts im wesentlichen alleine durch die Erstreckungsrichtung des unteren Segmentes bewirkt wird. Dadurch, daß ein drahtförmiges Rührelement in drei Abschnitte unterteilt ist, wobei nach der Erfindung sowohl der erste wie der dritte Abschnitt aus je einem unterschiedliche Erstreckungsrichtungen aufweisenden, oberen und unteren Segment besteht, wird eine gewisse Arbeitseinteilung am Rührbesen vorgenommen. Durch den Hinterherlauf des oberen Segments gegenüber dem unteren Segment, in Drehrichtung des Rührbesens gesehen, werden die Nahrungsmittel besonders intensiv von diesen Abschnitten erfaßt und nach oben bewegt bzw. geschleudert. An den oberen Segmenten hingegen, die im wesentlichen parallel zur Mittelachse der Antriebswelle verlaufen, wird dann das Gut weiter in Drehrichtung mitgenommen - allerdings in einer wesentlich beruhigteren Form, so daß das durch die unteren Segmente hochgespritzte Gut nicht weiter nach oben bewegt wird.

Je kleiner der zwischen dem oberen und unteren Segment eingeschlossene Winkel ist, umso intensiver wird das Gut nach oben geschleudert. Dies ist auch ein Maß dafür, inwieweit in kürzester Zeit eine Volumenzunahme bei durchzumischenden Gütern, wie Sahne, Eiweiß oder ähnlichen Nahrungsmittel, erreicht werden kann, d.h., wie locker und schaumig die Nahrungsmittel werden. Durch die Erfindung wird also ein Rührbesen geschaffen, der einerseits die Nahrungsmittel intensiv durchmischt, äußerst schnell schaumig schlägt und anderseits äußerst wenig zum Verspritzen der Nahrungsmittel neigt. Derartige Rührbesen sind nicht nur in Handrührern, sondern auch in großen Vielzweckküchenmaschinen einsetzbar.

Besonders gute Mischergebnisse bei guter Schaumbildung haben sich ergeben, wenn das untere Segment mit dem oberen Segment eines Rührelements einen Winkel von etwa 120° einschließt. Dieses gilt sowohl für den ersten wie für den dritten Abschnitt eines Rührelements.

Gemäß den Merkmalen des Schutzanspruchs 3 ergeben sich sowohl bei weniger wie mehr gefülltem Behälter ähnlich gute Rührergebnisse. Bevorzugt sollte allerdings ein Füllstand erreicht werden, der etwas oberhalb der oberen Enden der unteren Segmente liegt.

Weiterhin ist es vorteilhaft, daß die zweiten Abschnitte in der Mitte getrennt und mittels eines Verbindungselements miteinander verbunden sind. Durch diese Anordnung kann ein aus Draht hergestelltes Rührelement auch aus zwei Teilen bestehen, wobei die Trennung in der Mitte des zweiten Abschnitts erfolgt. Die beiden Abschnitte können dann beispielsweise an dieser Stelle durch Umspritzen in einem späteren Arbeitsgang miteinander verbunden werden. Da sich aber Draht besonders leicht biegen läßt, werden die Rührelemente vorteilhafterweise aus einem einzigen Draht durch Biegen geformt.

Hierbei liegen die unteren Abschnitte übereinander, d.h., bei beispielsweise vier Rührelementen würden vier untere Abschnitte übereinander angeordnet sein.

Dadurch, daß der quer verlaufende, zweite Abschnitt zur Mitte hin gewölbt ist, bildet der Rührbesen nur einen mittigen Berührungspunkt mit dem Boden eines Topfes. Hierdurch entsteht besonders wenig Reibung, und gleichzeitig kann auch der Handrührer mit dem Rührbesen bis zum einem gewissen Grad schräg gehalten werden, ohne daß gleich die ganze Breitseite des zweiten Abschnitts am Boden eines Topfes anschlägt.

Dadurch, daß der zweite Abschnitt von der Mitte aus gegenüber der Horizontalen um den Winkel b geneigt ist, kann ein geradliniger Streckenverlauf an jeder Hälfte des zweiten Abschnitts gewählt werden. Dies erleichtert auch das Biegen der Rührelemente. Durch den Winkel b können insbesondere kleine Mengen, wie Sahne und Eiweiß, bereits gut verarbeitet werden. Dennoch ist bei Rührteigen der nicht bearbeitete Bereich unterhalb des Drahtes so gering, daß hierdurch praktisch keine Nachteile entstehen, insbesondere dann nicht, wenn man beim Rührvorgang mit dem Rührbesen den Boden förmlich abfährt.

Besonders gute Rührergebnisse haben sich weiterhin dadurch ergeben, daß zwischen dem zweiten Abschnitt und dem zugehörigen, von der Antriebswelle ausgehenden Ende ein Winkel gebildet wird, der etwa 52° beträgt. Dieser Winkel bestimmt den Grad der Rückführung vom zweiten zum ersten Abschnitt, d.h., hierdurch wird auch beim geradlinigen, unteren Segmentverlauf dieser Winkel mit beeinflußt. Auch dadurch, daß alle an den Rührelementen ausgebildeten Abschnitte geradlinig verlaufen und lediglich an den Übergängen gerundet sind, wird eine besonders einfache Herstellung des Rührelements erreicht. Sehr gute Rühr- und Aufschäumergebnisse ergeben sich bereits bei einem Rührbesen mit zwei Rührelementen. Dabei ist der Materialeinsatz und der Aufwand zur Herstellung von Einzelteilen noch verhältnismäßig gering, so daß für die Herstellung eines derartigen Rührbesens auch niedrige Preise erzielt werden können.

Ein Ausführungsbeispiel der Erfindung ist in der Zeichnung dargestellt und wird im folgenden näher beschrieben. Es zeigen:
- FIG. 1: Seitenansicht auf den Rührbesen nach der Erfindung;
- FIG. 2: Seitenansicht von halbrechts auf den Rührbesen nach FIG. 1, wobei allerdings der Blickwinkel so gewählt wurde - wie es die Pfeilrichtung Y in FIG. 3 anzeigt - daß der untere Abschnitt 8 in der Achse der Mittellinie 28 liegt, und
- FIG. 3: Ansicht in Richtung X von unten auf den Rührbesen nach FIG. 1.

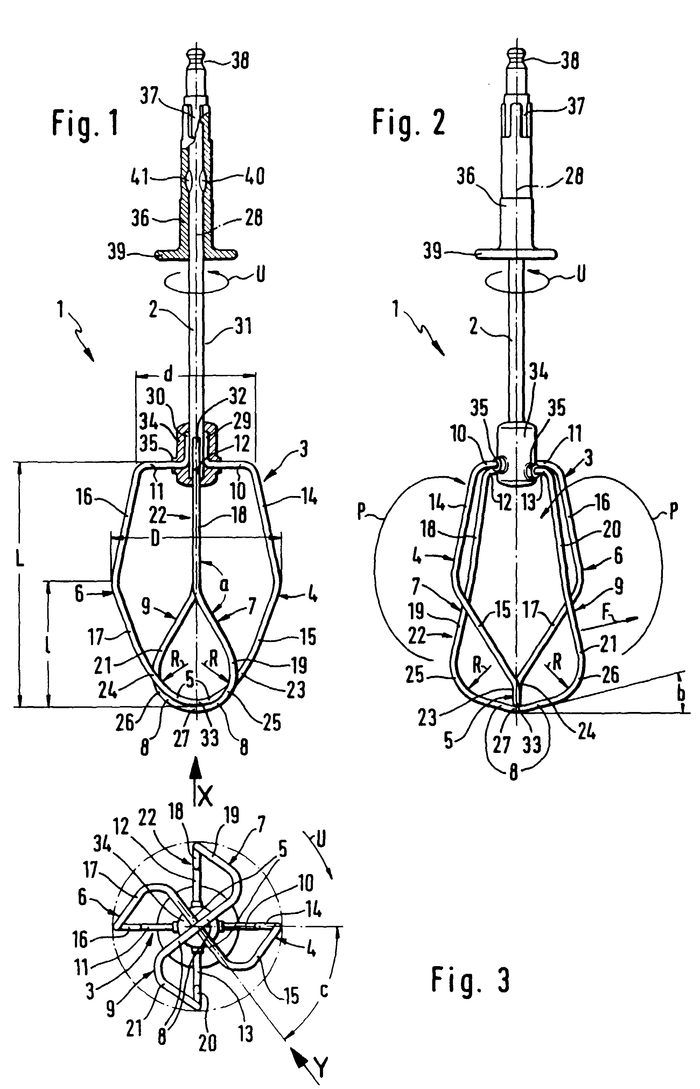

Der Rührbesen 1 besteht nach den Figuren 1 bis 3 im wesentlichen aus einer aus Draht hergestellten Antriebswelle 2, die sich längs der Mittellinie 28 des Rührbesens 1 erstreckt. Am unteren freien Ende der Antriebswelle 2 sind zwei die Form einer geschlossenen Schleife annehmenden Rührelemente 3, 22 befestigt. Die Rührelemente 3, 22 weisen die gleiche Gestalt auf, so daß nur auf eines der Rührelemente 3, 22 näher eingegangen wird.

Die beiden Rührelemente 3, 22 bilden die Form eines Kreuzes und verlaufen im wesentlichen senkrecht zueinander. Das von einer Drahtschleife gebildete Rührelement 3 weist an seinen beiden freien Enden einen parallel zur Antriebswelle 2 verlaufenden Endabschnitt 29, 30 auf, an die sich jeweils ein um 90° abgebogenes Ende 10, 11 anschließt. An das Ende 10 schließt sich ein im wesentlichen nach unten verlaufender, erster Abschnitt 4 an, der im wesentlichen aus einem oberen Segment 14 und einem unteren Segment 15 besteht. Das obere und untere Segment 14, 15 bildet den ersten Abschnitt 4 des Rührelements 3.

An das untere Segment 15 des ersten Abschnitts 4 schließt sich über den Radius R, der etwa 11 mm beträgt, der zweite Abschnitt 5 an, der im wesentlichen quer zum ersten Abschnitt 4 bzw. zur Antriebswelle 2 verläuft. Der zweite Abschnitt 5 bildet eine Mitte 27, an der der tiefste Punkt des Rührelements 3 erreicht ist. Die Mittellinie 28 bildet die Symmetrielinie sowohl des Rührelements 3 als auch des Rührelements 22.

Links von der Mittellinie 28 erstreckt sich der zweite Teil des zweiten Abschnitts 5 und mündet wieder in den Radius R ein, an den sich dann wiederum der dem ersten Abschnitt 4 symmetrisch gegenüberliegende dritte Abschnitt 6 anschließt. Der dritte Abschnitt 6 mündet wiederum in das horizontal verlaufende Ende 11, das sich zur Antriebswelle 2 erstreckt und mit dem abgewinkelten und parallel zur Antriebswelle 2 verlaufenden Endabschnitt 30 endet. Die beiden Endabschnitte 29, 30 liegen an der Mantelfläche 31 der Antriebswelle 2 an.

Den gleichen Verlauf wie das Rührelement 3 nimmt auch das Rührelement 22 an und beginnt demnach wiederum mit einem Endabschnitte 32 (FIG. 1), an den sich dann das horizontal verlaufende Ende 12 anschließt. An das Ende 12 schließt sich wiederum der erste Abschnitt 7 an, der aus dem oberen Segment 18 und dem unteren Segment 19 besteht. An das untere Segment 19 des Rührelements 22 schließt sich wiederum der zweite Abschnitt 8 des Rührelements 22 an, dessen tiefster Punkt die Mitte 33 bildet.

An den zweiten Abschnitt 8 schließt sich über den Radius R der dritte Abschnitt 9 an, der aus dem unteren Segment 21 und dem oberen Segment 20 besteht. Am dritten Abschnitt 9 verläuft zur Horizontalen abgewinkelt das Ende 13, an das sich wiederum ein um 90° abgewinkelter Endabschnitt (aus der Zeichnung nicht zu ersehen) anschließt und an der Mantelfläche 31 der Antriebswelle 2 anliegt.

Wie aus den Figuren ersichtlich, bildet das Rührelement 22 die äußere Drahtschleife, so daß die Mitte 27 auch den Berührungspunkt im Boden eines Topfes (nicht dargestellt) bildet. Damit die Rührelemente 3, 22 in Bezug zueinander fest angeordnet sind, können die zweiten Abschnitte 5, 8 in den Mitten 27, 33 fest miteinander verbunden sein, beispielsweise verschweißt oder verklebt.

Wie aus den Figuren 1 bis 3 weiterhin ersichtlich ist, sind die Endabschnitte 29, 30, 32 der Rührelemente 3, 22 mit der Antriebswelle 2 über eine diese Teile umspritzende Kunststoffnabe 34 fest mit der Antriebswelle 2 verbunden. Dabei kann die Kunststoffnabe 34 beispielsweise zweiteilig ausgebildet sein, wobei deren Teilung dann in Höhe der Enden 10, 11, 12 und 13 erfolgt. Somit würde die Nabe aus zwei Teilen bestehen, die beispielsweise durch Ultraschallverschweißen oder -kleben miteinander verbunden wären.

Wie aus den Figuren weiterhin ersichtlich, sind am Ausgang der Enden 10, 11, 12, 13 an der Nabe 34 Kragen 35 ausgebildet, die die Enden 10, 11, 12, 13 ringförmig umgeben und zur Versteifung bzw. zum besseren Halt der Rührelemente 3, 22 zusätzlich dienen.

An den den Rührelementen 3, 22 abgewandten Ende der Antriebswelle 2 ist auf diese eine Kunststoffhülse 36 aufgespritzt, die an ihrer Mantelfläche am Umfang verteilte Zahneingriffe 37 aufweist, die beim Einsetzen der Rührbesen 1 in an einem Handrührer ausgebildeten Kupplungshülsen (nicht dargestellt) drehfest mit diesen verbunden werden, so daß beim Einschalten des Handrührers die Rührbesen 1 in Drehung versetzt werden. An den Enden der Kunststoffhülsen 36 sind noch Einschnürungen 38 vorgesehen, die eine axiale Befestigung des Rührbesens mit dem Handrührer herstellen, wenn diese in die Antriebshülsen (nicht dargestellt) eingeschoben werden. Dabei greifen an den Kupplungselementen des Handrührers ausgebildete Federelemente rastend in diese Einschnürungen 38 ein.

Am unteren Ende der Kunststoffhülse 36 steht noch ein Ringbund 39 hervor, der zur besseren Handhabung der Rührbesen 1 einerseits und zur Kennzeichnung von linkem und rechtem Rührbesen andererseits dient. So kann nämlich der rechte Rührbesen beispielsweise mit einem vielkantförmigen und der linke Rührbesen mit einem kreisförmigen Ringbund 39 ausgestattet sein.

Um weitere Wiederholungen zu vermeiden, wird - da die beiden Rührelemente 3, 22 symmetrisch zur Mittellinie 28 verlaufen und beide gleich ausgebildet sind - nur noch auf den einen, rechts von der Mittellinie 28 gemäß FIG. 1 ausgebildeten Teil des Rührelements 3 Bezug genommen.

Der aus dem oberen und unteren Segment 14, 15 bestehende erste Abschnitt 4 des Rührelements 3 bildet beim Zusammentreffen beider Segmente 14, 15 seinen größten Durchmesser D, der etwa 52 mm beträgt. Dies bedeutet, daß, ausgehend von dem Ende 10, das obere Segment 14 schräg nach unten und gleichzeitig nach außen verläuft, während das untere Segment 15 sich wiederum schräg nach unten zur Mittellinie 28 hin erstreckt. Wie aus FIG. 2 ersichtlich, verläuft der rechts von der Mittellinie 28 verlaufende Teil des zweiten Abschnitts 5 unter dem Winkel b, der etwa 12° beträgt. Es ist aber auch durchaus denkbar, daß der zweite Abschnitt 5 von einem großen Radius gebildet wird, an den sich dann die Radien R zum ersten bzw. zum dritten Abschnitt 4 bzw. 6 anschließen.

Wie aus FIG. 2 weiterhin ersichtlich, weist das Maß d etwa die Größe von 35 mm auf, das sich ergibt, wenn man den Abstand zwischen den Schnittpunkten der oberen Segmente 14, 15 mit den zugehörigen Enden 10, 11 mißt. Wie aus FIG. 1 weiterhin zu ersehen ist, sind an der Antriebswelle 2 zwei diametral gegenüberliegende Abflachungen 40, 41 ausgebildet, die beim Anspritzen der Kunststoffhülse 36 eine bessere, drehfeste Verbindung mit diesem Teil herstellen.

Wie aus FIG. 3 ersichtlich ist, ist die Drehrichtung U hier im Uhrzeigersinn dargestellt, während sie dann aufgrund der umgedrehten Darstellung gemäß den Figuren 1 und 2 entgegen dem Uhrzeigersinn verläuft. Bei dem hier dargestellten Rührbesen 1 handelt es sich um einen linksdrehenden Rührbesen, da die unteren Segmente 15, 17, 19, 21 gegenüber den oberen Segmenten 14, 16, 18, 20 nach der Erfindung voreilen müssen.

Der Ringbund 39 dient weiterhin zur Kennzeichnung der richtigen Montage des Rührbesens in die richtige Kupplungseinrichtung im Handrührer (nicht dargestellt). So ist beispielsweise der mit einem runden Ringbund 39 versehene Rührbesen als rechter Rührbesen für den Handrührer gedacht, und der mit einem Mehrkant ausgebildete Ringbund 39 als linker Rührbesen für denselben Handrührer vorgesehen, d.h., der rechte Rührbesen 1 - wie er in FIG. 1 dargestellt ist - ist der linksdrehende und der linke Rührbesen ist der rechtsdrehende. Die Bezeichnung des rechten bzw. linken Rührbesens richtet sich danach, wo dieser beim Halten des Handrührers in die hierfür vorgesehene Kupplungseinrichtung eingesteckt wird. Demnach wird vom Betrachter aus beim Halten des Handrührers der rechte Rührbesen in die rechte Kupplungseinrichtung und der linke Rührbesen in die linke Kupplungseinrichtung eingesetzt.

Dadurch, daß nach der Erfindung jedes obere Segment 14, 16, 18, 20 im wesentlichen nach unten und geringfügig radial nach außen verläuft und anschließend das untere Segment 15, 17, 19, 21 zur Umfangsrichtung U derart um den Winkel a geneigt ist, ergeben sich sehr gute Rührergebnisse. Während nämlich im unteren Segment 15, 17, 19, 21 die Nahrungsmittel angehoben und gemäß der Pfeilführung F nach oben und radial nach außen geschleudert werden, werden sie in den oberen Segmenten 14, 16, 18, 20 im wesentlichen nur radial nach außen - also horizontal - bewegt, da diese Segmente zwar geringfügig radial nach außen, aber im wesentlichen parallel zur Antriebswelle 2 verlaufen. Hierdurch werden die aufsteigenden Nahrungsmittel horizontal beschleunigt, was das Umherspritzen von Nahrungsmitteln vermeidet. Gleichzeitig wird eine Kreisbewegung P gemäß FIG. 2 an den Nahrungsmitteln erzeugt, so daß eine kontinuierliche und in sich geschlossene Strömung auf die Nahrung ausgeübt wird. Dabei wird am Boden liegendes Material nach oben und oben befindliches Material durch den Rührbesen 1 wieder nach unten bewegt. Durch die in Umfangsrichtung U geneigten, unteren Segmente 15, 17, 19, 21 wirkt auf die Nahrungsmittel eine verhältnismäßig senkrechte Kraft, die ein schlagartiges Verteilen der Nahrungsmittel unter gutem Lufteinschluß ermöglicht.

Nach FIG. 1 beträgt die Höhe L eines Rührelements 3, 22 etwa 75 mm, während die Höhe 1 der unteren Segmente 15, 17, 19, 21 etwa 37 mm beträgt.

## Patentansprüche

1. Rotierender Rührbesen (1) mit einer Antriebswelle (2) und mit mindestens einem drahtförmigen, als Schleife ausgebildeten Rührelement (3, 22), das sich zunächst über das eine Ende (10) quer von der Antriebswelle (2) weg erstreckt, das sich nach einer ersten Biegung dann über einen ersten Abschnitt (4) nach unten erstreckt, das anschließend nach einer nächsten Biegung über einen zweiten Abschnitt (5) sich im wesentlichen wieder quer zur Antriebswelle (2) erstreckt, das nach einer weiteren Biegung über einen dritten Abschnitt (6,9) wieder nach oben verläuft und das schließlich nach einer letzten Biegung über das andere Ende (11) wieder quer zur Antriebswelle (2) und zurück zu dieser verläuft,
**dadurch gekennzeichnet,**
daß der erste (4, 7) und dritte (6, 9) Abschnitt so verlaufen, daß ihre von der Antriebswelle (2) ausgehenden Enden (10, 11 bzw. 12, 13) in Drehrichtung (U) des Rührbesens seine anderen Enden (23, 24 bzw. 25, 26) hinterlaufen, daß der erste (4, 7) und dritte (6, 9) Abschnitt im wesentlichen jeweils aus unterschiedliche Erstreckungsrichtungen aufweisenden oberen (14, 16; 18, 20) und unteren (15, 17; 19, 21) Segmenten bestehen und daß der Hinterherlauf des ersten (4, 7) und dritten (6, 9) Abschnitts im wesentlichen alleine durch die Erstreckungsrichtung des unteren Segmentes (15, 17; 19, 21) bewirkt wird.

2. Rührbesen nach Anspruch 1,
**dadurch gekennzeichnet,**
daß das untere (15, 17; 19, 21) mit dem oberen (14, 16;18, 20) Segment eines Winkel (a) von etwa 120° einschließt.

3. Rührbesen nach Anspruch 1 oder 2,
**dadurch gekennzeichnet,**
daß die Gesamthöhe (L) eines Rührelements (3, 22) sich zu der vom unteren Segment (15, 17; 19, 21) und dem zweiten Abschnitt (5; 8) gebildeten Höhe (1) wie etwa 2:1 verhält.

4. Rührbesen nach Anspruch 1,
**dadurch gekennzeichnet,**
daß die zweiten Abschnitte (5; 8) in der Mitte getrennt sind und mittels eines Verbindungselements miteinander verbunden sind.

5. Rührbesen nach Anspruch 1,
**dadurch gekennzeichnet**,
daß die unteren Abschnitte (5; 8) aufeinanderliegen und daß die Rührelemente (3, 22) jeweils von einem einzigen gebogenen Draht gebildet sind.

6. Rührbesen nach Anspruch 5,
**dadurch gekennzeichnet**,
daß der querverlaufende Abschnitt (5, 8) zur Mitte (27, 33) hin gewölbt ist.

7. Rührbesen nach Anspruch 6,
**dadurch gekennzeichnet**,
daß der zweite Abschnitt (5, 8) von der Mitte (27, 33) aus gegenüber der Horizontalen um den Winkel (b) geneigt ist und daß der Winkel (b) etwa 5-20°, vorzugsweise 15°, beträgt.

8. Rührbesen nach Anspruch 1,
**dadurch gekennzeichnet**,
daß zwischen dem zweiten Abschnitt (5; 8) und dem von der Antriebswelle (2) ausgehenden Ende (10, 11, 12, 13) ein Winkel (c) gebildet wird und daß der Winkel (c) etwa 52° beträgt.

9. Rührbesen nach einem der vorhergehenden Ansprüche,
**dadurch gekennzeichnet,**
daß dieser aus zwei geschlossenen Rührelementen (3, 22) besteht.

## Claims

1. A rotary beater (1) comprising a drive shaft (2) and at least one wire-shaped beater element (3, 22) configured as a loop, which beater element initially extends with one end (10) thereof away from and in a direction transverse to said drive shaft (2), which following a first bend extends downwardly along a first section (4), which following another bend extends again in a direction substantially transverse to said drive shaft (2) along a second section (5), which following still another bend continues upwardly along a third section (6, 9), and finally, following a last bend, extends with another end (11) thereof again in a direction transverse to said drive shaft (2), leading back to it,
**characterized in that** the first (4, 7) and third (6, 9) sections extend such that their ends (10, 11 and 12, 13, respectively) extending from the drive shaft (2) are arranged to trail relative to their other ends (23, 24 and 25, 26, respectively) in the beater's direction of rotation (U), that the first (4, 7) and third (6, 9) sections are comprised essentially of upper (14, 16; 18, 20) and lower (15, 17; 19, 21) segments extending each in different directions, and that the trailing of the first (4, 7) and third (6, 9) sections is effected essentially solely by the direction of extension of the lower segment (15, 17; 19, 21).

2. The beater of claim 1,
**characterized in that** the lower segment (15, 17; 19, 21) and the upper segment (14, 16; 18, 20) define between them an angle (a) of 120°, approximately.

3. The beater of claim 1 or 2,
**characterized in that** the ratio of the overall height (L) of a beater element (3, 22) to the combined height (1) of the lower segment (15, 17; 19, 21) and the second section (5; 8) is about 2:1.

4. The beater of claim 1,
**characterized in that** the second sections (5; 8) are split in the middle and interconnected by a connecting element.

5. The beater of claim 1,
**characterized in that** the lower sections (5; 8) lie on top of each other and that each beater element (3, 22) is formed of a single bent wire.

6. The beater of claim 5,
**characterized in that** the transversely extending section (5, 8) is curved towards the middle (27, 33).

7. The beater of claim 6,
**characterized in that** the second section (5, 8) is inclined from the middle (27, 33) relative to the horizontal line about the angle (b), and that said angle (b) is in the range of 5 and 20°, approximately, preferably 15°.

8. The beater of claim 1,
**characterized in that** an angle (c) is formed between the second section (5; 8) and the end (10, 11, 12, 13) extending from the drive shaft (2), and that said angle (c) amounts to 52°, approximately.

9. The beater according to any one of the preceding claims,
**characterized in that** said beater is comprised of two closed beater elements (3, 22).

## Revendications

1. Fouet à battre rotatif (1) comportant un arbre d'entraînement (2) et au moins un élément d'agitation (3,22) en forme de fil, réalisé sous la forme d'une boucle et qui s'écarte tout d'abord, par une extrémité (10), transversalement à partir de l'arbre d'entraînement (2), s'étend ensuite vers le bas après un premier coude, par une première partie (4), puis après un coude immédiatement suivant s'étend par une seconde partie (5) à nouveau essentiellement transversalement par rapport à l'arbre d'entraînement (2), s'étend à nouveau vers le haut, par une troisième partie (6,9) après un autre coude et finalement, après un dernier coude, s'étend à nouveau, par son autre extrémité (11), transversalement par rapport à l'arbre d'entraînement (2) et revient jusqu'à ce dernier,
caractérisé en ce
que la première partie (4,7) et la troisième partie (6,9) s'étendent de telle sorte que ces extrémités (10,11 ou 12,13), qui partent de l'arbre d'entraînement (2), se déplacent en arrière des autres extrémités (23,24 ou 25,26) du fouet à battre, dans le sens de rotation (U) de ce dernier, que la première partie (4,7) et la troisième partie (6,9) sont constituées essentiellement chacune de segments supérieurs (14,16;18,20) et de segments inférieurs (15,17;19,21) qui s'étendent dans des directions différentes, et que le déplacement, qui s'effectue en arrière, de la première partie (4,7) et de la troisième partie (6,9) est réalisé essentiellement uniquement dans la direction d'extension du segment inférieur (15,17;19,21).

2. Fouet à battre selon la revendication 1,
caractérisé en ce
que le segment inférieur (15,17;19,21) fait un angle (a) d'environ 120° par rapport au segment supérieur (14,16;18,20).

3. Fouet à battre selon la revendication 1 ou 2,
caractérisé en ce
que le rapport de la hauteur totale (L) d'un élément d'agitation (3,22) à la hauteur (1) formée par le segment inférieur (15,17;19,21) et la seconde partie (5;8) est égal approximativement à 2:1.

4. Fouet à battre selon la revendication 1,
caractérisé en ce
que les secondes parties (5;8) sont subdivisées en leur milieu et sont reliées entre elles au moyen d'un élément de liaison.

5. Fouet à battre selon la revendication 1,
caractérisé en ce
que les parties inférieures (5;8) sont situées l'une sur l'autre et que les éléments agitateurs (3,22) sont formés respectivement par un seul fil coudé.

6. Fouet à battre selon la revendication 5,
caractérisé en ce
que la partie transversale (5,8) est cintrée en direction du centre (27,33).

7. Fouet à battre selon la revendication 6,
caractérisé en ce
que la seconde partie (5,8) est inclinée de l'angle (b) par rapport à l'horizontale et que l'angle (b) est égal approximativement à 5-20°, de préférence 15°.

8. Fouet à battre selon la revendication 1,
caractérisé en ce
qu'un angle (c) est formé entre la seconde partie (5;8) et l'extrémité (10,11,12,13) qui s'étend à partir de l'arbre d'entraînement (2), et que l'angle (c) est égal approximativement à 52°.

9. Fouet à battre selon l'une des revendications
précédentes, caractérisé en ce
que ce dernier est constitué par deux éléments d'agitation fermés (3,22).
